# EUROPEAN PATENT APPLICATION

(11) **EP 4 733 106 A1**
(43) Date of publication of application: **29.04.2026**
(21) Application number: 25210092.0
(22) Date of filing: 21.10.2025
(51) Int. Cl.: B60K 7/00, B60K 17/04, B60B 35/14, F16H 63/30, F16H 48/08, B60B 35/12

(54) **WHEEL HUB FOR VEHICLE AXLE COMPRISING AN IMPROVED INTEGRATED REDUCTION SYSTEM**

(30) Priority: 25.10.2024 IT 202400023898
(71) Applicant: IVECO S.P.A., 10156 Torino (IT)
(72) Inventor: PEREIRA DE LEMOS, Josè Francivaldo, 10156 Torino (IT)
(74) Representative: Studio Torta S.p.A.

(57) **Abstract**

A wheel hub (10) for an axle (4) of a vehicle (1) comprising a hollow portion (10a) carried in a rotationally free manner on a casing (5), a reduction unit (15) housed inside the chamber (13), the drive-shaft (7a, 7b) comprising a set of teeth (7c) configured to cooperate selectively with a set of teeth (18') integral with the sun gear (18), or a set of teeth (21') integral with the pins (21), thus defining different transmission ratios between the drive-shaft (7a, 7b) and the wheel hub (10).

## Description

### CROSS-REFERENCE TO RELATED APPLICATIONS

This patent application claims priority from Italian patent application no. 102024000023898 filed on October 25, 2024, the entire disclosure of which is incorporated herein by reference.

### TECHNICAL SECTOR

This invention relates to a wheel hub for a vehicle axle, in particular a wheel hub for a heavy vehicle axle comprising a reduction system integrated into the hub.

### PRIOR ART

As is well known, it is essential to reduce the torque coming from the drive shaft with respect to the axles in a wheeled vehicle equipped with at least one internal combustion engine.

As is also well known, vehicles are normally equipped with a differential unit configured to differentiate the torque coming from the drive shaft between a pair of drive-shafts of the axle, for well-known dynamic requirements when driving the vehicle.

The above-mentioned torque reduction is normally achieved by means of well-known gearboxes placed between the drive shaft and the above-mentioned differential unit.

However, in the case of heavy vehicles, these reduction ratios are known to be insufficient in number to provide an adequate reduction ratio between torque at the drive shaft and torque at the axle wheels under various load conditions.

It is in fact clear that a heavy vehicle, such as a truck, has to withstand a considerable difference in weight between being unloaded and fully loaded; therefore, the highest available gears are not necessarily the most suitable for when the vehicle is unloaded.

For this purpose, reduction systems integrated into wheel hubs are known. However, these systems need further improvements to increase their efficiency.

In addition, the known reduction systems do not allow the gears in them to engage when the vehicle is moving, thus necessitating the vehicle to be stopped and resulting in increased unproductive times.

The above requirements are all the more important in the case of partially or fully electrified vehicles.

There is, therefore, a need to provide an axle reduction system for a vehicle that can solve the above-mentioned problems.

The purpose of this invention is to meet the needs mentioned above in an optimal and inexpensive way.

### SUMMARY OF THE INVENTION

The above-mentioned purpose is achieved with a wheel hub for an axle fitted with an integrated reduction system and a vehicle as claimed in the attached claims which form an integral part of this description.

### BRIEF DESCRIPTION OF THE DRAWINGS

For a better understanding of this invention, a preferred embodiment is described below by way of nonlimiting example and with reference to the accompanying drawings, wherein:
- Figure 1 is a schematic cross-section view from above of a vehicle fitted with wheel hubs according to the invention;
- Figure 2 is a schematic view in cross section of an axle provided with wheel hubs according to the invention;
- Figures 3 and 4 are cross-section views of a vehicle hub according to the invention in different operating steps; and

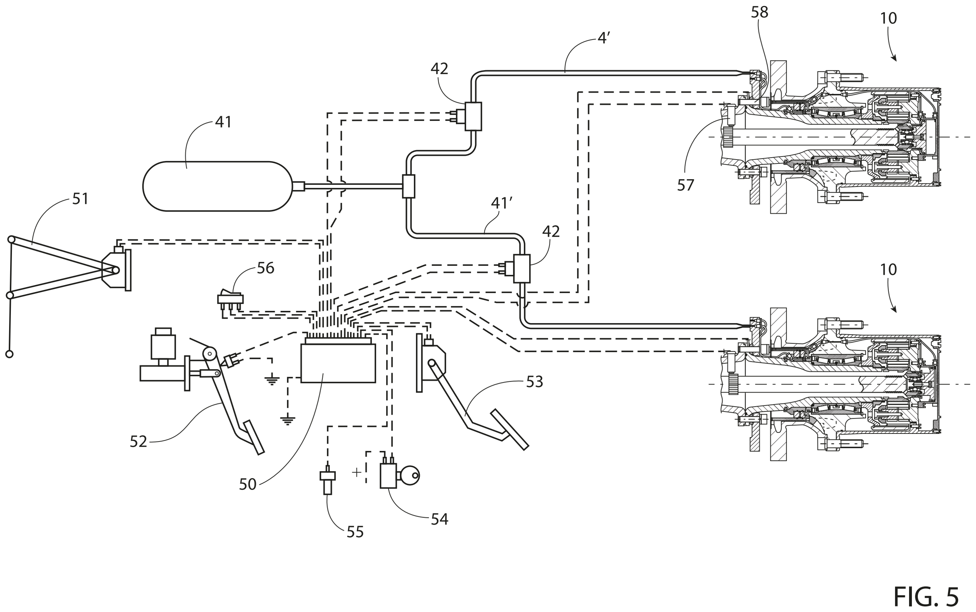

- Figure 5 is a schematic view of a control system for the vehicle hub according to the invention.

### DETAILED DESCRIPTION OF THE INVENTION

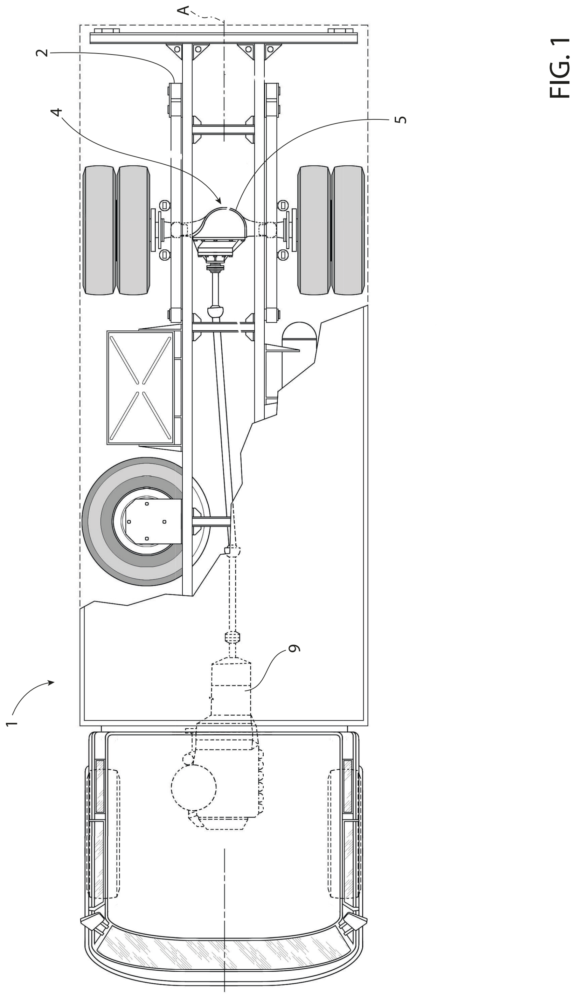

Figure 1 shows a commercial or heavy vehicle 1 comprising a chassis 2 extending along a longitudinal axis A and movable by means of wheels 3 supported by an axle 4.

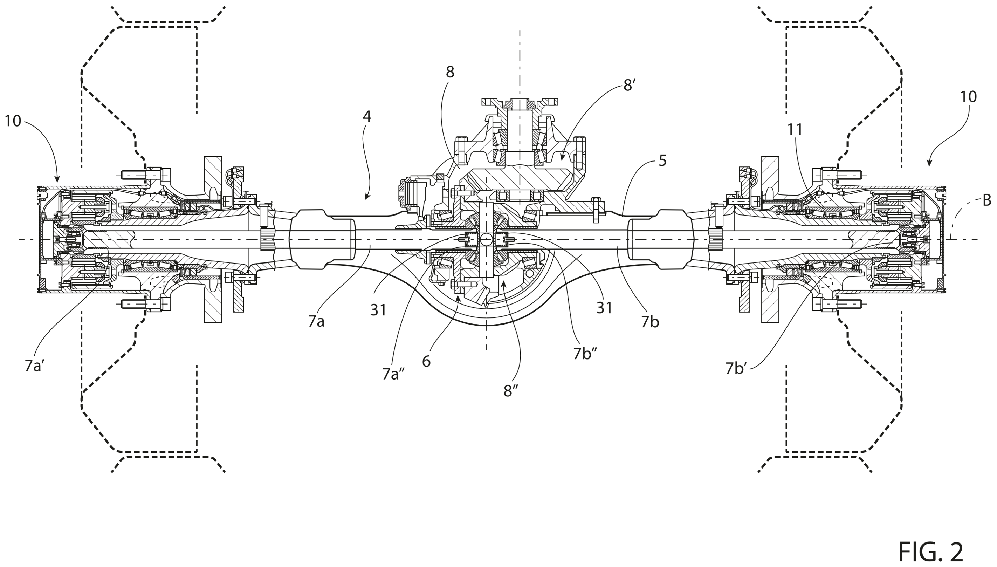

As illustrated in Figure 2, the axle 4 comprises a casing 5 defining a space 6 designed to at least partially house a pair of drive-shafts 7a, 7b extending along a transverse axis B with respect to the longitudinal axis A of the vehicle 1.

Specifically, the drive-shafts 7a, 7b are operatively connected at one end to a transmission 8 of the vehicle 1 and at the opposite end to respective wheel hubs 10. In the example illustrated, the transmission 8 comprises a gear 8' that rests on a differential 8" that distributes torque to the drive-shafts 7a, 7b.

In particular, the gear 8' is operatively connected to a torque 9 source such as a powertrain, for example an internal combustion engine.

In the embodiment shown, the gear 8' is conical; however, it is clear that - like the differential 8'' - it could be made differently.

With regard to the wheel hubs 10, reference will be made to only one of them for simplicity, for example to the right one, and the considerations below also apply in the same way to the left wheel hub, of course, the structure described herein being symmetrical along the longitudinal axis A of the vehicle 1.

Specifically, the wheel hubs 10 supported by the housing 5 in a rotationally free manner and each configured to cooperate with a respective external end portion 7b' of the drive-shaft 7b as described in detail below.

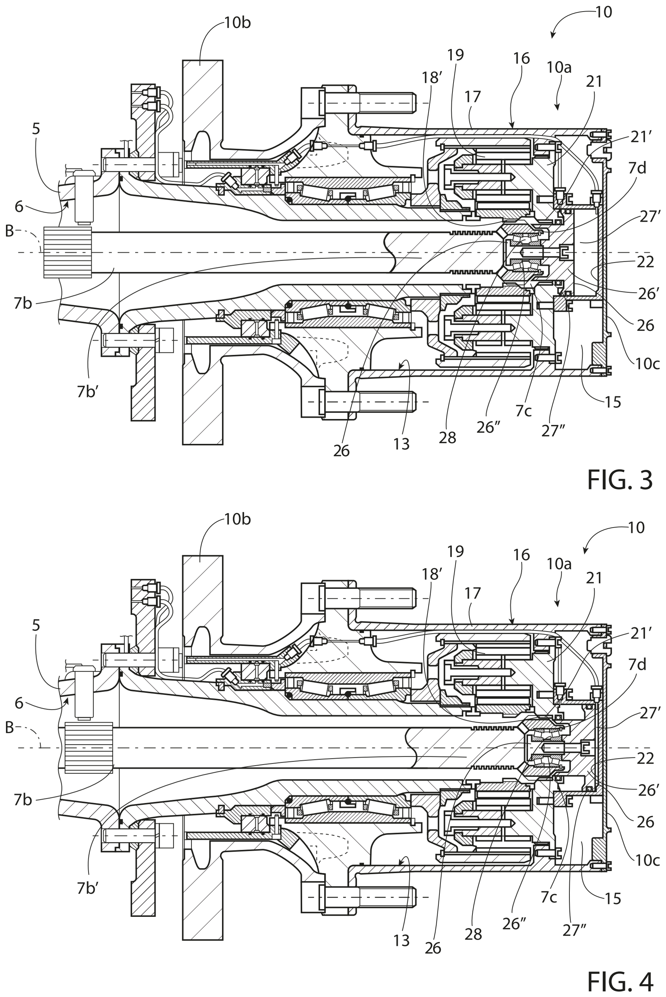

The wheel hub 10, as better illustrated in Figures 3 and 4, is supported rotationally freely with respect to the casing 5, in particular it is hollow and coaxial with respect to the transverse axis B. In the example described herein, the wheel hub 6 is supported by means of support elements 11, such as a pair of conical bearings and sealing means, such as O-rings.

In particular, the hub 10 comprises a main portion 10a with an essentially cylindrical shape supported by the casing 2 and an annular portion 10b housed at an end portion of the casing 5 and supported by the main portion 10a.

Advantageously, the main portion 10a and the annular portion 10b are coupled by means of threaded means, of a known type, and, optionally, with the aid of further intermediate parts, depending on the assembly due to the type and weight of the vehicle and, therefore, not described in detail.

With the end part of the casing 5, the cylindrical portion 10a defines a chamber 13 axially delimited along the axis B by an axial wall 10c of the main portion 10a and, on the other side, by the end part of the casing 5; this chamber 13 is radially delimited around the axis B by the inner surface of the main portion 10a of the wheel hub 10.

The wheel hub 10 is operatively connected to the axle 4 by means of a reduction unit 15 housed within the chamber 13 and configured to connect the wheel hub 10 to the drive-shaft 7b with two different transmission ratios, that is, so that the speed/torque at the drive-shaft 7b is different from the speed/torque at the wheel hub 10 according to two different speed ratios.

In particular, the reduction unit 15 comprises a gearing 16 configured to cooperate with a set of teeth 7c supported by the end 7b' between a first or second operating configuration characterised in that it defines different transmission ratios between the drive-shaft 7b and wheel hub 10, as described below.

In particular, the gearing 16 is preferably of the planetary type and comprises a crown 17, a sun gear 18, multiple satellites 19 meshing between the crown 17 and the sun gear 18 and supported so that it revolves by respective pins 21.

Specifically, in the described embodiment, the crown 17 is rigidly supported by the casing 5, the sun gear 18 is supported so that it can revolve freely between the casing 5 and the cylindrical portion 10a and the pins 21 are supported integral with the cylindrical portion 10a.

Advantageously, the sun gear 18 defines a set of teeth 18' and pins 21 define a set of teeth 21' configured to selectively engage, depending on the position of the set of teeth 7c along the axis B, with the latter.

Specifically, in a first position, the set of teeth 7c cooperates with the set of teeth 21' of the pins 21, providing torque directly to the cylindrical portion 10a and, thus, to the vehicle wheel. In a second position, the set of teeth 7c cooperates with the set of teeth 18' of the sun gear 18, providing torque to the cylindrical portion 10a and thus to the vehicle wheel via the gear 15.

In particular, the set of teeth 7c is rigidly supported by the end portion 7b' which is moved, therefore, together with the entire drive-shaft 7b, by means of an actuation system 25 operatively interposed between the wheel hub 10, in particular between the axial wall 10c and the drive-shaft 7b.

More specifically, the actuation system 25 comprises a piston 26 housed in a chamber 27 isolated from the space 13. The piston 26 is configured to slide in a fluid-tight manner inside the chamber 27 and selectively push the end portion 7b' depending on the pressure inside the chamber 27.

In the embodiment illustrated, the chamber 27 is defined between the axial wall 10c of the cylindrical portion 10a and the pins 21, that is, by an end extending to it and advantageously made of a single piece with the latter.

Specifically, the piston 26 comprises a main portion 26' configured to flow in a fluid-tight manner inside the chamber 27, dividing it into a first portion 27' and a second portion 27".

Specifically, the first portion 27' is fluidically connected to a first duct 41' and the second portion 27'' is connected to a second duct 41'' that can be fluidically connected to a source 41 of pressurised fluid of the vehicle 1.

The first and second ducts 41', 41'' enable fluidic connection between the source of fluid 41 and the portions 27', 27" by means of a number of rotating fluidic connection joints not described for brevity but schematically depicted in the attached drawings.

Advantageously, the piston 26 is connected to the end portion 7b to push it along the axis B in both directions.

Specifically, in the illustrated embodiment, the piston 26 comprises a cantilever portion 26" extending from the opposite side of the chamber 27 along the axis B, that is, towards the drive-shaft 7b and configured to define a first end shoulder 26‴.

This cantilever portion 26'' houses rolling bearing means 28 configured to allow relative rotation between the end portion 7b and the cantilever portion 26".

Specifically, the terminal portion 7b also defines a second end shoulder 7d on the opposite side of the rolling bearing means 28 along the axis B with respect to the first shoulder 26‴ of the cantilever portion 26".

Advantageously, therefore, the rolling bearing means 28 are, therefore, axially comprised along the axis B between the two shoulders 26‴, 7d. These rolling bearing means 28 preferably comprise roller bearings, particularly conical roller bearings.

As can be seen best in Figure 2, from an internal end 7b'' opposite the internal end 7b' of the drive-shaft 7b, the axle 4 comprises elastic means 31 configured to allow the drive-shaft 7b to move along the axis B and maintain it, if there is no pressure in the chamber 27, in the first, above-mentioned condition.

In particular, the internal end 7b" cooperates with the transmission 8 via a grooved coupling made on the drive-shaft 7b and an output element of the transmission 8, such as, in the case described, a pinion of the differential 8".

In particular, the elastic means 31 are housed in a seat defined by the internal end portion 7b' and cooperate sliding in rotation between the internal end portion 7b' and further transmission 8 elements, for example with the pins of the differential 8".

For the sake of brevity, this is not further described, as it could be executed as in the patent EP4279765 A1, the contents of which are incorporated by reference, where applicable, in this description.

Advantageously, the vehicle 1 also comprises an electronic control unit 50 and multiple sensors designed to detect quantities relating to different operating parameters of the vehicle, the control unit 50 comprises processing means electronically connected to the sensor means for acquiring the data detected by the sensor means and consequently controlling the passage of pressurized fluid between the first or second portions 27', 27'' of the chamber 27.

In particular, the sensors can be connected to the control unit 50 by a wire or electromagnetically, and the control unit 50 is configured to control valve means 42 that are advantageously interposed along the respective ducts 21', 21" and configured to allow or inhibit the passage of pressurised fluid from the source 21 to the portions 27', 27".

These valve means 42 may be, for example, solenoid valves.

In particular, the electronic unit 50 contains stored data relating to the control of the actuation system 25 and the valve means 42.

The vehicle 1 may also comprise control means (not shown) configured to vary the data stored in the control unit 50 so as to vary the actuating condition of the actuation system 25 and the valve means 42.

The sensor means preferably comprise at least some of the following:
- A load sensor 51 configured to detect the load of a suspension connecting the axle 4 to the chassis 2, for example a load cell;
- A clutch sensor 52 configured to detect the opening of a control clutch of the transmission 8, for example a position sensor connected to the clutch pedal;
- An accelerator sensor 53 configured to detect the acceleration of the vehicle 1, for example a position sensor connected to the accelerator pedal;
- An ignition sensor 54 configured to detect the ignition of the vehicle 1, for example a key ignition system motion sensor;
- A speed sensor 55 configured to detect a rotation speed of the powertrain 9 output shaft, for example a phonic wheel;
- A control sensor 56 configured to detect the activation of the possibility of changing the wheel hub ratio, for example a button or an icon on a display;
- A speed sensor 57 configured to detect a rotation speed of the axle 4, thus of the drive-shafts 7a, 7b, such as a phonic wheel or encoder; and
- A speed sensor 58, configured to detect a wheel hub 10 speed, such as a phonic wheel or encoder type ABS sensor.

The operation of the wheel hub according to the invention as described above is as follows.

In a first operating condition (Figure 43), the pressurised fluid is controlled to increase the pressure in the first chamber 27' by acting against the thrust of the elastic means 31, which compress. Specifically, the piston 26 pushes, thanks to the coupling between the shoulders 26''' and 7d, the drive-shaft 7b which slides inside the transmission 8 thanks to the compression of the elastic means 31. In this way, the set of teeth 7c engages with the sun gear 18, which sets the satellites 19 in rotation, which drive the pins 21 and, thus, put the wheel hub 10 in motion.

In a second operating condition (Figure 4), the pressurised fluid is controlled to increase the pressure in the second chamber 27'' by acting in parallel with the thrust of the elastic means 31. In this configuration, the set of teeth 7c meshes directly with the pins 21 and, thus, puts the wheel hub 10 in motion.

In the second operating condition, the speed of the wheel hub 10 is clearly higher, being the same as that of the drive-shaft 7b and, therefore, being suited to lower levels of torque to be transmitted than in the first operating condition.

In accordance with the above, this invention also relates to a method for controlling a wheel hub 10 equipped with a reduction unit 15 of the type described above.

This method essentially comprises the following steps:
- Detecting multiple physical quantities relating to operating parameters of the vehicle 1;
- Processing such detected physical quantities to identify a vehicle load condition;
- Verifying whether the vehicle load condition complies with the reduction ratio of the wheel hub 10;
- If it complies, the ratio is maintained; otherwise, the actuation system is controlled to switch to a different reduction ratio.

In particular, control of the actuation system 25 comprises sending a control signal to the valve means 42.

In particular, the method illustrated above can be stored and processed in the control unit 50 described above, and the physical quantities detected can be some of the quantities detected by the sensor means 51-58.

The vehicle load condition can be verified by checking the measured quantities against physical quantities stored in the control unit 50, for example by means of look-up tables (LUTs) derived from experimental tests specific to the particular vehicle type.

Otherwise, the above-mentioned verification can be carried out by comparison against a value deriving from mathematical interpolations between said physical quantities.

From the above, the advantages of a wheel hub for a vehicle axle comprising an integrated reduction system according to the invention are clear.

With the proposed system, it is possible to provide a reduction system integrated into a versatile, compact, cost-effective wheel hub that is easier to install and maintain than known systems.

Thanks to the additional reduction system and the two transmission ratios that can be chosen depending on the type and size of vehicle, reductions in fuel consumption, and thus in pollutant emissions, can be increased.

In particular, the use of a gearing integrated with the wheel hub allows high transmission ratios to be achieved through a robust gear suitable for the high loads of a heavy vehicle axle.

In particular, the proposed actuation system is particularly versatile and easy to maintain and replace.

In addition, the presence of two ducts that selectively inject air into two different chambers allows the actuators to activate the reduction ratio change in a faster and more controlled manner. In particular, it is possible to control this change when the vehicle is moving.

In fact, thanks to the control method described, it is possible to engage the change in the reduction unit 15 when the vehicle is in motion.

The control can be automated and stored in the electronic unit, and control variables can be stored in advance or modified by the driver.

Finally, it is clear that the wheel hub of a vehicle axle comprising an integrated reduction system according to this invention can be modified, and variations can be made thereof, without, however, departing from the scope of protection as set forth in the claims.

Obviously, as mentioned, the casing 4 and wheel hub 10 can have different shapes and be made of several different parts.

Again, the gear wheels and gears described could vary and elements not described but known to exist could be included for the assembly of an axle according to this invention.

Clearly, the above description refers to air actuation, which is the most effective and economical; however, the use of equivalent actuator means such as electromagnetic, mechanical or fluid actuators configured to move the sleeve 31 instead of the air pressure force described in this application cannot be ruled out.

In addition, the method described could comprise different ways of verifying the engagement condition of the wheel hub/drive-shaft ratios, as mentioned above, by means of limit value verifications from mathematical interpolations or tables.

## Claims

1. A wheel hub (10) for an axle (4) of a vehicle (1) comprising:
- a hollow portion (10a) carried in a rotationally free manner on a casing (5) of said axle (4) around an axis (B) of the latter, said hollow portion (10a) defining a chamber (13) between an internal wall thereof and said casing (5),
- a reduction unit (15) housed inside said chamber (13) and configured to vary the torque transmitted by a drive-shaft (7a, 7b) of said axle (4) and said wheel hub (10),
- an actuator device (25) configured to move said drive-shaft (7a, 7b) along said axis (B) with respect to said casing (A),
said reduction unit (15) comprising a gearing (16) equipped with:
a crown (17), a sun gear (18) and a plurality of satellites (19) meshing between said crown (17) and rotatably carried by respective pins (21), said pins (21) being carried by said hollow portion (10a)
said drive-shaft (7a, 7b) carrying a set of teeth (7c) configured to cooperate selectively with:
- - a set of teeth (18') integral with said sun gear (18), or
- - a set of teeth (21') integral with said pins (21)
defining different transmission ratios between said drive-shaft (7a, 7b) and said wheel hub (10), wherein said actuator device (25) is pneumatic, wherein said actuator device (25) comprises a piston (26) housed in a chamber (27) formed between said pins (21) and said wheel hub (10), said piston (26) being housed in a sealed sliding manner in said chamber (27) dividing said chamber into two portions (27', 27"), at least one portion (27', 27") of said chamber (27) being connectable to a source of pressurized fluid of said vehicle (1), said piston (26) being configured to push said drive- shaft (7a, 7b) in both directions along said axis (B) as a function of the pressure present in said at least one portion (27', 27") of said chamber (27), wherein said piston (26) comprises a cantilever portion (26") supported by rolling bearing means (28) with respect to said drive-shaft (7b), said cantilever portion (26") defining a first shoulder (26‴) and said drive-shaft (7b) defining a second shoulder (7d) on the opposite side of said first shoulder (267‴) of said cantilever portion (26‴), said rolling bearing means (28) being axially interposed between said first and second shoulders (26‴, 7d).

2. The wheel hub according to claim 1, wherein said plurality of satellites (19) mesh with the sun gear (18) supported so as to rotate with respect to said hollow portion (10a) and said casing (5).

3. The wheel hub according to claim 2, wherein said pins (21) are integral with said hollow portion (10a).

4. The wheel hub according to one of the preceding claims, wherein said crown (17) is rigidly supported by said casing (5).

5. The wheel hub according to claim 4, wherein said rolling bearing means (28) comprise roller bearings.

6. An axle (4) for a vehicle comprising:
- a casing (5) defining a space (6) along an axis (B);
- a pair of drive-shafts (7a, 7b) housed at least partially in said space (6) and comprising respective internal ends housed in a sliding manner within respective elements of a transmission (8) of said vehicle (1) configured to provide a driving torque to said drive-shafts (7a, 7b);
- respective wheel hubs (10) according to one of the preceding claims, said wheel hubs (10) being carried by said drive-shafts (7a, 7b) on respective external ends opposite to said internal ends and in a rotationally free manner from said casing (5).

7. The axle according to claim 6, comprising elastic means (31) housed between said elements of said transmission (8) and said internal ends of said drive-shaft (7a, 7b), said elastic means (31) being configured to provide a force suitable for maintaining said set of teeth (7c) of said drive-shaft (7a, 7b) meshing with said pins (21).

8. A vehicle (1) comprising a chassis (2), a powertrain (9), a transmission (8) and at least one axle (4) according to claim 6.

9. The vehicle according to claim 8, comprising a source of pressurized fluid (41) fluidically connected via at least one duct (41', 41") to said actuation system (30) and valve means (42) fluidically interposed on said at least one duct (41', 41'') to regulate the passage of pressurized fluid.

10. The vehicle according to claim 9, comprising a control unit (50) and a plurality of sensor means (51-58) configured to detect physical quantities relating to operational conditions of said vehicle (1), said control unit (50) comprising processing means electrically connected to said sensor means (51-58) to acquire the data detected by them, process them and consequently control said valve means (42) based on data relating to said operational conditions stored in said processing means.

11. The vehicle according to claim 10, comprising control means configured to vary the data stored in said electronic unit (50) relating to said operational quantities.

12. The vehicle according to claim 10 or 11, comprising at least some of the following sensor means (51-58):
• A load sensor (51) configured to detect the load of a suspension connecting said axle (4) to said chassis;
• A clutch sensor (52) configured to detect the opening of a control clutch of said transmission (8);
• An accelerator sensor (53) configured to detect the acceleration of said vehicle (1);
• An ignition sensor (54) configured to detect the ignition of said vehicle (1);
• A speed sensor (55) configured to detect a rotation speed of an output shaft of said powertrain (9);
• A control sensor (56) configured to detect the activation of the possibility of varying the ratio of said wheel hub (10)
• A speed sensor (57) configured to detect the speed of said drive-shafts (7a, 7b); and
• A speed sensor (58), configured to detect a speed of said wheel hub (10).

13. A method for controlling a wheel hub (10) in a vehicle according to claim 12, comprising the following steps:
• Detecting a plurality of physical quantities relating to operating parameters of said vehicle (1);
• Processing such detected physical quantities to identify a vehicle load condition;
• Verifying whether the vehicle load condition complies with the reduction ratio of said wheel hub (10);
• If it complies, said ratio is maintained, otherwise said actuation system (30) is controlled to switch to a different reduction ratio.

14. The method according to claim 13, wherein said control of said actuation system (30) comprises sending a signal to control said valve means (42).
